# EUROPÄISCHE PATENTSCHRIFT

(11) **EP 3 784 464 B1**
(45) Veröffentlichungstag und Bekanntmachung des Hinweises auf die Patenterteilung: **07.06.2023**
(21) Anmeldenummer: 19705345.7
(22) Anmeldetag: 14.02.2019
(51) Int. Cl.: B29C 45/16, B29C 45/26, B29C 45/06, B29C 45/73, B29C 45/17

(54) **SPRITZGIESSMASCHINE MIT EINER EINEN KANAL FÜR EIN FLUID AUFWEISENDEN INDEXWELLE**
INJECTION-MOULDING MACHINE WITH AN INDEX SHAFT HAVING A CHANNEL FOR A FLUID
MACHINE DE MOULAGE PAR INJECTION COMPRENANT UN ARBRE D'INDICE COMPORTANT UN CANAL POUR UN FLUIDE

(30) Priorität: 27.04.2018 DE 102018110223
(43) Veröffentlichungstag der Anmeldung: 03.03.2021
(73) Patentinhaber: KraussMaffei Technologies GmbH, 80997 München (DE)
(72) Erfinder: FIEDERLE, Ralf, 88260 Eglofs (DE)
(74) Vertreter: Wilhelm, Ludwig
(86) Internationale Anmeldenummer: PCT/EP2019/053653
(87) Internationale Veröffentlichungsnummer: WO 2019/206486

(56) Entgegenhaltungen:
- EP-A1- 1 688 232
- WO-A1-02/057064
- WO-A1-2006/018364
- DE-U1-202015 101 432

## Beschreibung

Die Erfindung betrifft eine Spritzgießmaschine, aufweisend eine erste Formaufspannplatte, die ausgebildet ist zum Tragen einer ersten Formhälfte eines Spritzgießwerkzeugs, eine zweite Formaufspannplatte, die ausgebildet ist zum Tragen einer zweiten Formhälfte des Spritzgießwerkzeugs, derart, dass die erste Formhälfte und die zweite Formhälfte in einem geschlossenen Zustand des Spritzgießwerkzeugs wenigstens eine Kavität des Spritzgießwerkzeugs begrenzen, und aufweisend eine an der Spritzgießmaschine außerhalb des Spritzgießwerkzeugs drehbar und axial verstellbar gelagerte Indexwelle, die mittels eines außerhalb des Spritzgießwerkzeugs angeordneten Motors der Spritzgießmaschine drehangetrieben ist und die einen in der Einbaulage des Spritzgießwerkzeugs in der Spritzgießmaschine in die Kavität des Spritzgießwerkzeugs hineinragenden Endabschnitt aufweist, der zum Befestigen einer innerhalb der Kavität anzuordnenden Indexplatte an der Indexwelle ausgebildet ist und wobei die Indexplatte mittels der von dem Motor angetriebenen Indexwelle zwischen einer ersten Plattenstellung der Indexplatte und wenigstens einer zweiten Plattenstellung der Indexplatte automatisch verstellbar ist.

Aus der DE 20 2015 101 432 U1 ist beispielsweise eine Spritzgießmaschine bekannt mit einer feststehenden Formaufspannplatte zur Aufnahme eines ersten Teils eines Spritzgießwerkzeugs, mit einer beweglichen Formaufspannplatte zur Aufnahme eines zweiten Teils eines Spritzgießwerkzeug, und mit zwei weiteren Platten, die außerhalb des Einbauraums des Spritzgießwerkzeugs hinter einer der Formaufspannplatten angeordnet sind, insbesondere hinter der beweglichen Formaufspannplatte, wobei es sich bei der ersten weiteren Platte um eine Auswerferplatte handelt, die zum Auswerfen von Formteilen aus dem Spritzgießwerkzeug vorgesehen ist und die zur Aufnahme von Auswerferstangen ausgebildet oder mit Auswerferstangen versehen ist, wobei es sich bei der zweiten weiteren Platte um eine Zusatzplatte handelt, an der ein Drehantrieb vorgesehen ist, wobei der Drehantrieb in Wirkverbindung mit einer Drehwelle steht, welche mit einem drehbaren Teil des Spritzgießwerkzeugs, insbesondere mit einer Indexplatte, verbindbar oder verbunden ist, und wobei die Auswerferplatte und die Zusatzplatte unabhängig voneinander in Maschinenlängsrichtung verfahrbar sind. Um Medien, insbesondere fluide Medien, dem drehbaren Teil des Spritzgießwerkzeugs, insbesondere der Indexplatte zuführen zu können, kann dort wahlweise eine Drehdurchführung oder eine Schlauchdurchführung vorgesehen sein. Bei einer solchen Schlauchdurchführung sind die Schläuche für die Medienversorgung direkt an die Drehwelle angeschlossen, genauer gesagt an die in der Drehwelle verlaufenden Kanäle zur Medienversorgung. Die Drehwelle kann daher nur in begrenztem Maße vor und zurückgedreht werden. Ein Durchdrehen oder Durchtakten der Drehwelle ist mit einer solchen Schlauchdurchführung nicht möglich.

Die WO2006018364 A1 offenbart eine Spritzgussmaschine nach dem Oberbegriff des Anspruchs 1. Die WO02057064 A1 offenbart eine Spritzgussmaschine, bei der in der schliessseitigen Aufspannplatte ein Hohlwellenmotor eingelassen ist und durch den eine Indexwelle zum Verstellen einer Indexplatte hindurchgeführt ist.

Aufgabe der Erfindung ist es, eine Spritzgießmaschine zu schaffen, bei der Fluide über eine Indexwelle hinweg auf einfache und zuverlässige Weise an eine von der Indexwelle umpositionierbare Indexplatte geführt werden können.

Die Aufgabe wird gelöst durch eine Spritzgießmaschine, aufweisend eine erste Formaufspannplatte, die ausgebildet ist zum Tragen einer ersten Formhälfte eines Spritzgießwerkzeugs, eine zweite Formaufspannplatte, die ausgebildet ist zum Tragen einer zweiten Formhälfte des Spritzgießwerkzeugs, derart, dass die erste Formhälfte und die zweite Formhälfte in einem geschlossenen Zustand des Spritzgießwerkzeugs wenigstens eine Kavität des Spritzgießwerkzeugs begrenzen, und aufweisend eine an der Spritzgießmaschine außerhalb des Spritzgießwerkzeugs drehbar und axial verstellbar gelagerte Indexwelle, die mittels eines außerhalb des Spritzgießwerkzeugs angeordneten Motors der Spritzgießmaschine drehangetrieben ist und die einen in der Einbaulage des Spritzgießwerkzeugs in der Spritzgießmaschine in das Spritzgießwerkzeug des Spritzgießwerkzeugs hineinragenden Endabschnitt aufweist, der zum Befestigen einer innerhalb des Spritzgießwerkzeugs anzuordnenden Indexplatte an der Indexwelle ausgebildet ist und die wenigstens einen Kanal aufweist, der ausgebildet ist, ein Fluid der Indexplatte zuzuführen oder von der Indexplatte abzuführen, wobei die Indexplatte mittels der von dem Motor angetriebenen Indexwelle zwischen einer ersten Plattenstellung der Indexplatte und wenigstens einer zweiten Plattenstellung der Indexplatte automatisch verstellbar ist, und wobei der Motor eine hohle Motorwelle aufweist, durch welche das Fluid hindurchgeführt ist.

Neben der Nutzung wenigstens eines Kanals der Indexwelle als ein Strömungskanal für Fluide oder als ein Tunnel für eine Fluidleitung, kann der Kanal oder der Tunnel auch genutzt werden, um beispielsweise elektrische Leitungen oder elektrische Kabel hindurchzuführen. Generell kann der Kanal in der Indexwelle als eine Bohrung ausgebildet sein.

In einer ersten grundlegenden Ausführungsvariante kann der Kanal als ein Strömungskanal ausgebildet sein, in dem das Fluid zwischen einem der Indexplatte abgewandten Endabschnitt der Indexwelle und dem in das Spritzgießwerkzeug hineinragenden Endabschnitt der Indexwelle gefördert wird. Um dies zu ermöglich kann beispielsweise die Indexwelle an ihrem der Indexplatte abgewandten Endabschnitt ein Anschlussstück aufweisen, das strömungstechnisch mit dem Strömungskanal verbunden ist und an das eine Zulauffluidleitung angeschlossen ist. Die Zulauffluidleitung kann an einem der Indexplatte abgewandten Endabschnitt der Indexwelle radial wegführend an die Indexwelle angeschlossen sein und seitlich der Indexwelle in eine um die Drehachse der Indexwelle abrollende Energiekette der Spritzgießmaschine hineingeführt sein. In dieser Ausführungsform kann das Anschlussstück an einer Mantelwand der Indexwelle angeordnet sein. Alternativ kann die Zulauffluidleitung an einem der Indexplatte abgewandten Stirnende der Indexwelle axial an die Indexwelle angeschlossen sein und außerhalb der Indexwelle zumindest im Wesentlichen um eine 90 Grad-Biegung von der Drehachse der Indexwelle weggeführt sein und anschließend in eine um die Drehachse der Indexwelle abrollende Energiekette der Spritzgießmaschine hineingeführt sein. In dieser Ausführungsform kann das Anschlussstück an dem der Indexplatte abgewandten Stirnende der Indexwelle angeordnet sein.

In einer zweiten grundlegenden Ausführungsvariante kann der Kanal als ein Tunnel ausgebildet sein, in dem eine Fluidleitung oder ein Abschnitt einer Fluidleitung verlegt ist, wobei das Fluid innerhalb der Fluidleitung oder dem Abschnitt der Fluidleitung zwischen einem der Indexplatte abgewandten Endabschnitt der Indexwelle und dem in das Spritzgießwerkzeug hineinragenden Endabschnitt der Indexwelle gefördert wird.

Indem der Motor, der für das Drehen der Indexwelle ausgebildet ist, eine hohle Motorwelle aufweist, durch welche die Fluidleitung hindurchgeführt ist, kann die Fluidleitung in einer axialen Richtung zur Drehbewegung der Indexwelle durch den Motor hindurchgeführt werden und gleichzeitig durch den Kanal der Indexwelle hindurchgeführt werden. Beispielsweise durch eine am Ende der Indexwelle befindliche rotationsbeweglich aufgehängte Energiekette erübrigt sich es die Fluidleitung beispielsweise über eine Drehdurchführung in die Indexwelle einzuleiten. Der Aufbau der Indexwelle kann dadurch erheblich vereinfacht werden. Aufwändige, teure und wartungsintensive Drehdurchführungen können entfallen. Da der Motor eine hohle Motorwelle aufweist kann der Motor koaxial zur Indexwelle oder zumindest mit der Drehachse der Indexwelle fluchtend angeordnet werden. Eine solche Anordnung ist besonders vorteilhaft, da die Motorwelle insoweit in die hohle Indexwelle direkt übergehen kann. Aufgrund der hohten Motorwelle des Motors kann die Fluidleitung axial stirnseitig der Indexwelle zugeführt werden. Eine axiale Zuführung der Fluidleitung ist besonders günstig.

Am Austritt der Indexwelle kann die Fluidleitung dann auf einfache Weise in eine Energiekette umgeleitet werden. Die Energiekette dient dem Schutz und der Führung des aus der Indexwelle heraustretenden Abschnitts der Fluidleitung. Die Energiekette kann auch als eine Energieführungskette bezeichnet werden. Eine Energiekette oder Energieführungskette kann im Allgemeinen aus mehreren Einzelglieder bestehen, die gelenkig miteinander verbunden sind und insoweit eine Kette einer Vielzahl von Einzelgliedern bildet. Aufgrund der gelenkigen Verbindung der einzelnen Einzelglieder kann die gesamte Kette unter geringem Kraftaufwand entlang einer Bogenlinie geführt und bewegt werden. Die Einzelglieder bilden dabei einen inneren Führungskanal, in den die Fluidleitung eingelegt werden kann. Die Einzelglieder begrenzen die Fluidleitung von außen und bilden einen Schutz für die Fluidleitung gegen Beschädigung von außen. Die Energiekette kann dabei einen kleinsten zulässigen Biegeradius für die Fluidleitung gewährleisten und gleichzeitig einen Verschleiß der Fluidleitung reduzieren. Die Energiekette kann an der Spritzgießmaschine derart gelagert sein, dass die Fluidleitung unter geringer Biegebelastung und geringem Verschleiß der Drehung der Indexwelle folgen kann. Gegebenenfalls kann die Fluidleitung innerhalb der Energiekette fixiert, beispielsweise geklemmt werden, so dass hierdurch eine optionale Zugentlastung gebildet werden kann.

Die Fluidleitung kann einadrig oder mehradrig ausgebildet sein. Es kann beispielsweise eine erste Einzelleitung innerhalb des Kanals der Indexwelle zum Zuführen eines Fluides an die Indexplatte vorgesehen sein und eine zweite Einzelleitung innerhalb des Kanals der Indexwelle zum Abführen eines Fluides an die Indexplatte vorgesehen sein. Gleichzeitig kann beispielsweise eine erste Einzelleitung innerhalb der Energiekette zum Zuführen eines Fluides an die Indexplatte vorgesehen sein und eine zweite Einzelleitung innerhalb der Energiekette zum Abführen eines Fluides an die Indexplatte vorgesehen sein.

Insoweit kann die Fluidleitung als eine einstückige, d.h. Verbindungskopplungsstellen freie Fluidleitung ausgebildet sein. Die Fluidleitung kann insbesondere einstückig von der Energiekette wegführend in die Indexwelle hineinführend Verbindungskopplungsstellen freie ausgebildet sein. Alternativ kann die Fluidleitung aus mehreren Teilstücken von Fluidleitungen bzw. als mehrere, insbesondere voneinander trennbare und wieder zusammenfügbare Abschnitte von Fluidleitungen ausgebildet sein.

Die Fluidleitung kann beispielsweise von einem oder mehreren Schläuchen gebildet werden. Die Schläuche weisen dabei im Allgemeinen eine kreiszylindrische Mantelwand auf und sind innen hohl ausgebildet, so dass innerhalb der kreiszylindrischen Mantelwand des Schlauches das Fluid transportiert, insbesondere gepumpt werden kann. Das Fluid, das in der Fluidleitung bzw. in dem Schlauch geführt wird, kann eine Kühlflüssigkeit sein oder eine Heizflüssigkeit sein. Das Fluid kann beispielsweise ein Öl oder Wasser sein. Gegebenenfalls kann als Fluid auch ein Gas, wie beispielsweise Druckluft oder Stickstoff durch die Fluidleitung geführt werden. Da aufgrund der hohlen Motorwelle eine insoweit einfache und vollständig dichte Schlauchleitung durch die Indexwelle geführt werden kann, entfällt eine spezielle Aufbereitung oder ein Reinigen bzw. Filtern des Fluids. Da das Fluid weder mit der hohlen Motorwelle noch mit der Indexwelle in direktem Kontakt kommt, können auch Maßnahmen zum Korrosionsschutz entfallen.

In allen Ausführungsvarianten kann der Motor als ein getriebeloser Torquemotor ausgebildet sein. Unter einem Torquemotor wird im Allgemeinen ein Motor verstanden, der bei geringen Drehzahlen, d.h. wenigen Umdrehungen pro Minute (beispielweise 10 bis 300) ein großes Drehmoment erzeugen können. Dabei wird auch eine hohe Positioniergenauigkeit erreicht. Im Speziellen wird unter einem Torquemotor ein getriebeloser Direktantrieb verstanden. Der Torquemotor kann insbesondere ein hochpoliger bürstenloser Gleichstrommotor oder ein geschalteter Reluktanzmotor sein. Der Motor, insbesondere der Torquemotor kann vorzugsweise als ein Innenläufer ausgebildet sein. Die Motorwelle ist dabei als eine Hohlwelle ausgebildet. In dem freien Innenraum der Hohlwelle ist die Indexwelle angeordnet. Die Indexwelle ist an die Hohlwelle des Motors gekoppelt, insbesondere starr verbunden, so dass die Indexwelle durch den Motor drehangetrieben werden kann.

Der Motor und die Indexwelle können derart an der Spritzgießmaschine angeordnet sein, dass die Zentrumsachse der hohlen Motorwelle und die Zentrumsachse der Indexwelle auf einer gemeinsamen Drehachse liegen.

Die hohle Motorwelle und die den Kanal aufweisende Indexwelle können insoweit entweder stirnseitig aneinander stoßend angeordnet sein oder koaxial ineinander gesteckt angeordnet sein. Indem der Motor und die Indexwelle derart an der Spritzgießmaschine angeordnet sind, dass die Zentrumsachse der hohlen Motorwelle und die Zentrumsachse der Indexwelle auf einer gemeinsamen Drehachse liegen, kann der Kanalabschnitt innerhalb der hohlen Motorwelle mit dem Kanal der Indexwelle fluchten, so dass die Fluidleitung insbesondere biegungsfrei und knickungsfrei durch den Motor und die Indexwelle hindurchgeführt werden kann.

Die hohle Motorwelle kann sich koaxial zur Indexwelle erstrecken und die Indexwelle kann dabei aus einem von der Indexplatte abgewandten Ende der hohlen Motorwelle herausgeführt sein.

In dieser Ausführungsvariante läuft die Fluidleitung nicht unmittelbar in der hohlen Motorwelle, sondern lediglich innerhalb des Kanals der Indexwelle unmittelbar. Die die Fluidleitung tragende Indexwelle erstreckt sich dann vollständig durch die hohle Motorwelle des Motors hindurch. Insoweit erstreckt sich nur die Indexwelle unmittelbar durch die hohle Motorwelle und die Fluidleitung unmittelbar durch die Indexwelle.

Die durch den Kanal der Indexwelle hindurchgeführte Fluidleitung kann an einem der Indexplatte abgewandten Endabschnitt der Indexwelle radial aus dem Kanal der Indexwelle herausgeführt sein und seitlich der Indexwelle in eine um die Drehachse der Indexwelle abrollende Energiekette der Spritzgießmaschine hineingeführt sein.

Alternativ kann die durch den Kanal der Indexwelle hindurchgeführte Fluidleitung an einem der Indexplatte abgewandten Stirnende der Indexwelle axial aus dem Kanal der Indexwelle herausgeführt sein und außerhalb der Indexwelle zumindest im Wesentlichen um eine 90 Grad-Biegung von der Drehachse der Indexwelle weggeführt sein und anschließend in eine um die Drehachse der Indexwelle abrollende Energiekette der Spritzgießmaschine hineingeführt sein.

Die Spritzgießmaschine kann in allen Ausführungen eine verstellbar gelagerte Auswerferplatte aufweisen, die an einer dem Spritzgießwerkzeug abgewandten Rückseite der ersten Formaufspannplatte oder der zweiten Formaufspannplatte angeordnet ist und die ihrerseits eine dem Spritzgießwerkzeug abgewandte Rückseite aufweist, an der sowohl der Motor mit seinem Motorgehäuse befestigt ist, als auch die Indexwelle durch den Motor drehbar und relativ zur Auswerferplatte in axialer Richtung unbeweglich gelagert ist.

Die hohle Motorwelle kann ein Innenprofil aufweisen und die Indexwelle ein Außenprofil aufweisen, wobei das Innenprofil der hohlen Motorwelle und das Außenprofil der Indexwelle derart aufeinander abgestimmt sind, dass die hohle Motorwelle drehfest mit der Indexwelle gekoppelt ist.

Die Indexwelle kann in axialer Richtung relativ zur hohlen Motorwelle verschiebbar geführt sein.

Die Fluidleitung kann als eine sich einstückig durch die hohle Motorwelle des Motors und den Kanal der Indexwelle bis zur Indexplatte erstreckende Schlauchleitung ausgebildet sein.

Die Fluidleitung kann einadrig oder mehradrig ausgebildet sein. Es kann beispielsweise eine erste Einzelleitung innerhalb des Kanals der Indexwelle zum Zuführen eines Fluides an die Indexplatte vorgesehen sein und eine zweite Einzelleitung innerhalb des Kanals der Indexwelle zum Abführen eines Fluides an die Indexplatte vorgesehen sein. Gleichzeitig kann beispielsweise eine erste Einzelleitung innerhalb der Energiekette zum Zuführen eines Fluides an die Indexplatte vorgesehen sein und eine zweite Einzelleitung innerhalb der Energiekette zum Abführen eines Fluides an die Indexplatte vorgesehen sein.

Insoweit kann die Fluidleitung als eine einstückige, d.h. Verbindungskopplungsstellen freie Fluidleitung ausgebildet sein. Die Fluidleitung kann insbesondere einstückig von der Energiekette wegführend in die Indexwelle hineinführend Verbindungskopplungsstellen freie ausgebildet sein.

Die Fluidleitung kann beispielsweise von einem oder mehreren Schläuchen gebildet werden. Die Schläuche weisen dabei im Allgemeinen eine kreiszylindrische Mantelwand auf und sind innen hohl ausgebildet, so dass innerhalb der kreiszylindrischen Mantelwand des Schlauches das Fluid transportiert, insbesondere gepumpt werden kann. Das Fluid, das in der Fluidleitung bzw. in dem Schlauch geführt wird, kann eine Kühlflüssigkeit sein oder eine Heizflüssigkeit sein. Das Fluid kann beispielsweise ein Öl oder Wasser sein. Gegebenenfalls kann als Fluid auch ein Gas, wie beispielsweise Druckluft oder Stickstoff durch die Fluidleitung geführt werden. Da aufgrund der hohlen Motorwelle eine insoweit einfache und vollständig dichte Schlauchleitung durch die Indexwelle geführt werden kann, entfällt eine spezielle Aufbereitung oder ein Reinigen bzw. Filtern des Fluids. Da das Fluid weder mit der hohlen Motorwelle noch mit der Indexwelle in direktem Kontakt kommt, können auch Maßnahmen zum Korrosionsschutz entfallen.

Ein konkretes Ausführungsbeispiel der Erfindung ist in der nachfolgenden Beschreibung unter Bezugnahme auf die beigefügten Figuren näher erläutert. Konkrete Merkmale dieses exemplarisches Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine schematische Darstellung einer beispielhaften Spritzgießmaschine,
- Fig. 2: eine schematische Schnittdarstellung durch den Motor und die Indexwelle im rückseitigen Bereich einer beweglichen Formaufspannplatte in der ersten Ausführungsvariante mit einem Strömungskanal, an den eine Zulauffluidleitung axial stirnseitig über ein Anschlussstück angeschlossen ist,
- Fig. 3: eine schematische Schnittdarstellung durch den Motor und die Indexwelle im rückseitigen Bereich der beweglichen Formaufspannplatte in der ersten Ausführungsvariante mit einem Strömungskanal, an den eine Zulauffluidleitung radial über ein Anschlussstück angeschlossen ist,
- Fig. 4: eine schematische Schnittdarstellung durch den Motor und die Indexwelle im rückseitigen Bereich der beweglichen Formaufspannplatte in der zweiten Ausführungsvariante mit der Indexplatte in einer ersten Plattenstellung und einer axiale herausgeführten durchgehenden Fluidleitung,
- Fig. 5: eine schematische Schnittdarstellung durch den Motor und die Indexwelle im rückseitigen Bereich der beweglichen Formaufspannplatte mit der Indexplatte gemäß Fig. 4 in einer zweiten Plattenstellung, und
- Fig. 6: eine schematische Schnittdarstellung durch den Motor und die Indexwelle im rückseitigen Bereich der beweglichen Formaufspannplatte in der zweiten Ausführungsvariante mit einer radial herausgeführten durchgehenden Fluidleitung.

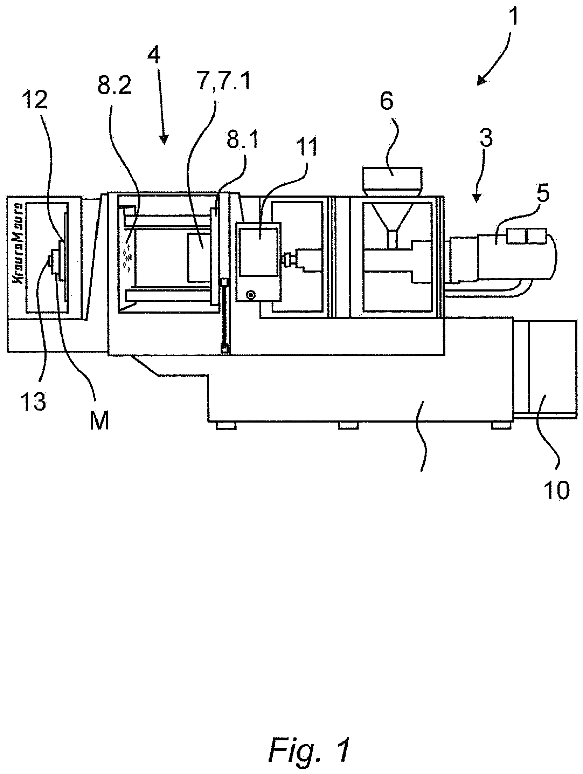

Die in Fig. 1 gezeigte beispielhafte Spritzgießmaschine 1 weist ein Maschinengestell 2 auf, auf dem eine Spritzeinheit 3 und eine Schließeinheit 4 angeordnet sind. Die Spritzeinheit 3 dient zum Aufbereiten einer zu formenden Kunststoffmasse. Die Spritzeinheit 3 weist im Falle des vorliegenden Ausführungsbeispiels einen Extruder 5 auf. Der Extruder 5 ist ausgebildet, wenigstens ein Kunststoffvorprodukt, wie beispielsweise ein Kunststoff-Granulat zu schmelzen, zu vermischen und zu homogenisieren, ggf. zu entgasen. Der Extruder 5 weist dazu, bzw. für die Zuführung von bspw. des Kunststoff-Granulats einen Aufgabetrichter 6 auf.

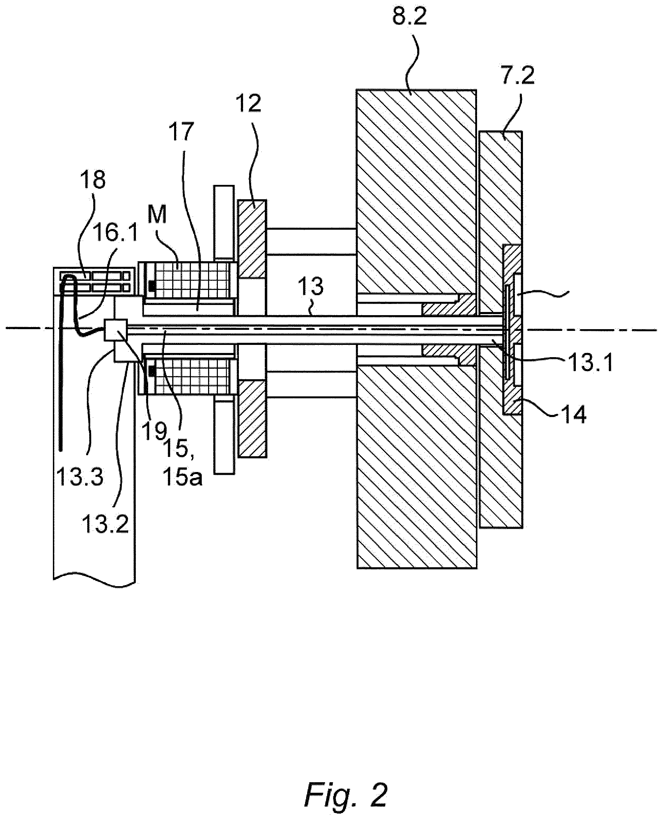

An einem vorderen Ende der Spritzeinheit 3 bzw. an einem vorderen Ende des Extruders 5 ist eine nicht näher dargestellte Spritzdüse angeordnet, die an ein Spritzgießwerkzeug 7 angekoppelt ist. Das Spritzgießwerkzeug 7 ist in der Schließeinheit 4 der Kunststoff-Spritzgießmaschine 1 angeordnet, welche üblicher Weise auf dem Maschinengestell 2 der Spritzgießmaschine1 angeordnet ist und eine feststehende Formaufspannplatte 8.1 und eine bewegliche Formaufspannplatte 8.2 aufweist. Das Spritzgießwerkzeug 7 umfasst wenigstens zwei Formhälften 7.1 und 7.2, von denen die erste Formhälfte 7.1 auf der feststehenden Formaufspannplatte 8.1 befestigt ist und die zweite Formhälfte 7.2 (in Fig.1 nicht dargestellt d.h. entnommen) auf der bewegliche Formaufspannplatte 8.2 befestigt ist, derart, dass bei einem Öffnen der Schließeinheit 4, d.h. bei einem Auseinanderfahren von feststehender Formaufspannplatte 8.1 und beweglicher Formaufspannplatte 8.2 mindestens eine Kavität 9 (Fig. 2) des Spritzgießwerkzeugs 7 freigegeben wird.

Die Spritzgießmaschine 1 weist demgemäß mehrere Maschinenteile auf. Gewisse Maschinenteile können beweglich gelagert sein und mittels eines Motors (M) oder Antriebs, insbesondere hydraulischen oder elektrischen Motors bzw. hydraulischen oder elektrischen Antriebs automatisch oder in einem Handfahrbetrieb manuell gesteuert bewegt werden. So stellt ein beispielhaftes Maschinenteil die Schließeinheit 4 dar, welche angesteuert von einer Maschinensteuerung 10 der Spritzgießmaschine 1, gemäß eines in der Maschinensteuerung 10 ablaufenden Maschinenprogramms, automatisch oder in einem Handfahrbetrieb bspw. mittels einer Benutzerschnittstellenvorrichtung 11 der Spritzgießmaschine 1 manuell gesteuert, geöffnet oder geschlossen werden kann. Ein anderes beispielhaftes Maschinenteil stellt die Spritzeinheit 3 dar, welche angesteuert von der Maschinensteuerung 10 der Spritzgießmaschine 1, gemäß eines in der Maschinensteuerung 10 ablaufenden Maschinenprogramms, automatisch oder in einem Handfahrbetrieb bspw. mittels der Benutzerschnittstellenvorrichtung 11 manuell gesteuert, betrieben werden kann, beispielsweise durch Ansteuern oder Regeln der Drehzahl des Extruders 5 oder durch Ansteuern oder Regeln wenigstens einer nicht näher dargestellten Heizvorrichtung der Spritzeinheit 3. Die Spritzgießmaschine 1 umfasst außerdem wenigstens eine Auswerferplatte 12, die im Falle des vorliegenden Ausführungsbeispiels rückseitig der beweglichen Formaufspannplatte 8.2 linear verstellbar gelagert ist. An der Auswerferplatte 12 ist außerdem eine Indexwelle 13 gelagert, die durch einen Motor M antreibbar ist und an der eine Indexplatte 14 (Fig. 2) befestigt ist.

Die Fig. 2 zeigt den Kanal 15 als einen Strömungskanal 15a, in dem das Fluid zwischen einem der Indexplatte 14 abgewandten Endabschnitt 13.2 der Indexwelle 13 und dem in das Spritzgießwerkzeug 7 hineinragenden Endabschnitt 13.1 der Indexwelle 13 gefördert wird. Die Indexwelle 13 weist in diesem Fall an ihrem der Indexplatte 14 abgewandten Endabschnitt 13.2 ein Anschlussstück 19 auf, das strömungstechnisch mit dem Strömungskanal 15a verbunden ist und an das eine Zulauffluidleitung 16.1 angeschlossen ist. Die Zulauffluidleitung 16.1 ist an einem der Indexplatte 13 abgewandten Stirnende 13.3 der Indexwelle 13 axial an die Indexwelle 13 angeschlossen und außerhalb der Indexwelle 13 zumindest im Wesentlichen um eine 90 Grad-Biegung von der Drehachse der Indexwelle 13 weggeführt und anschließend in eine um die Drehachse der Indexwelle 13 abrollende Energiekette 18 der Spritzgießmaschine 1 hineingeführt.

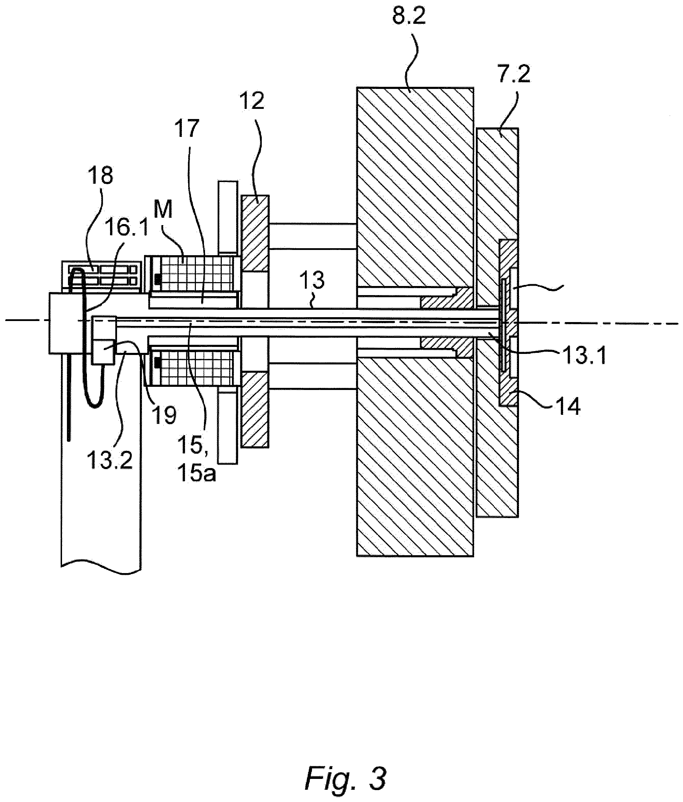

Die Fig. 3 zeigt die Zulauffluidleitung 16.1, wie sie an einem der Indexplatte 14 abgewandten Endabschnitt 13.2 der Indexwelle 13 radial wegführend an die Indexwelle 13 angeschlossen ist und seitlich der Indexwelle 13 in eine um die Drehachse der Indexwelle abrollende Energiekette 18 der Spritzgießmaschine 1 hineingeführt ist.

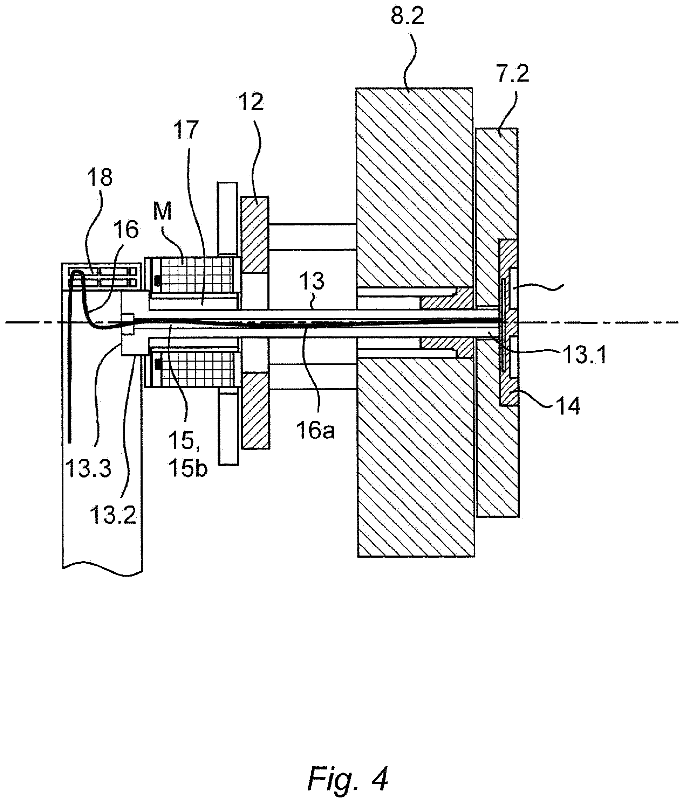

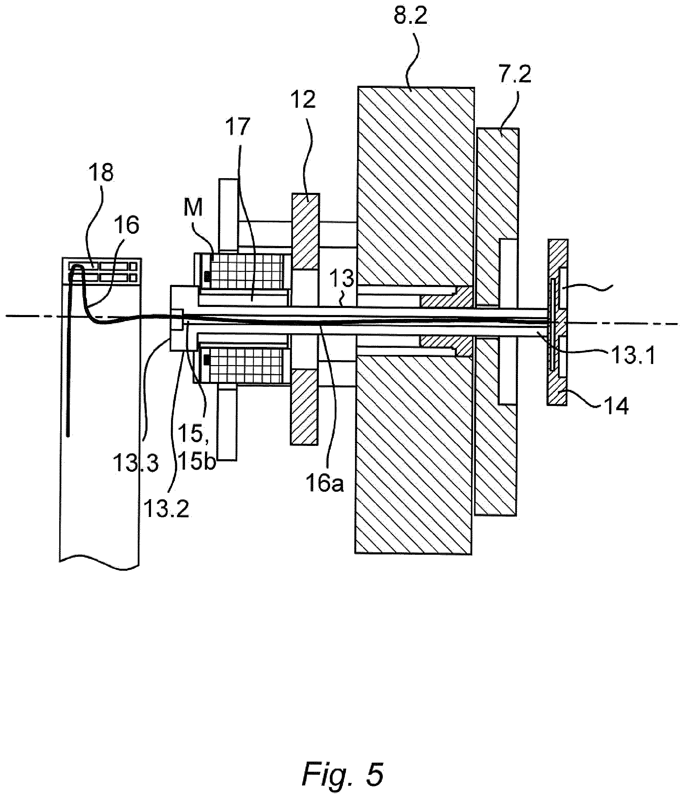

in Fig. 4 und Fig. 5 ist in Abwandlung zur Fig. 2 und Fig. 3 der Kanal 15 als ein Tunnel 15b ausgebildet, in dem eine Fluidleitung 16 oder ein Abschnitt einer Fluidleitung 16a verlegt ist, wobei das Fluid innerhalb der Fluidleitung 16 und dem Abschnitt der Fluidleitung 16a zwischen einem der Indexplatte 14 abgewandten Endabschnitt 13.2 der Indexwelle 13 und dem in das Spritzgießwerkzeug 7 hineinragenden Endabschnitt 13.1 der Indexwelle 13 gefördert wird.

Die in Fig. 4 und Fig. 5 gezeigte beispielhafte Spritzgießmaschine 1, weist somit eine erste Formaufspannplatte 8.1 auf, die ausgebildet ist zum Tragen der ersten Formhälfte 7.1 des Spritzgießwerkzeugs 7, und weist eine zweite Formaufspannplatte 8.2 auf, die ausgebildet ist zum Tragen der zweiten Formhälfte 7.2 des Spritzgießwerkzeugs 7, derart, dass die erste Formhälfte 7.1 und die zweite Formhälfte 7.2 in einem geschlossenen Zustand des Spritzgießwerkzeugs 7 wenigstens eine Kavität 9 des Spritzgießwerkzeugs 7 begrenzen.

Die Spritzgießmaschine 1 weist außerdem die außerhalb des Spritzgießwerkzeugs 7 drehbar und axial verstellbar gelagerte Indexwelle 13 auf, die mittels eines außerhalb des Spritzgießwerkzeugs 7 angeordneten Motors M der Spritzgießmaschine 1 drehangetrieben ist.

Die Indexwelle 13 weist einen in der Einbaulage des Spritzgießwerkzeugs 7 in der Spritzgießmaschine 1 in das Spritzgießwerkzeug 7 hineinragenden Endabschnitt 13.1 auf, der zum Befestigen einer innerhalb des Spritzgießwerkzeugs 7 anzuordnenden Indexplatte 14 an der Indexwelle 13 ausgebildet ist. Die Indexwelle 13 weist wenigstens einen Kanal 15 auf, in dem wenigstens eine Fluidleitung 16 verläuft. Der Kanal 15 ist ausgebildet, der Indexplatte 14 ein Fluid von außerhalb zuzuführen oder aus dem Inneren der Indexplatte 14 abzuführen. Die Indexplatte 14 ist mittels der von dem Motor M angetriebenen Indexwelle 13 zwischen einer ersten Plattenstellung, wie beispielsweise in Fig. 4 gezeigt ist, und wenigstens einer zweiten Plattenstellung, wie beispielsweise in Fig. 5 gezeigt ist, automatisch verstellbar, wobei der Motor M eine hohle Motorwelle 17 aufweist, durch welche die Fluidleitung 16 und somit auch die Indexwelle 13 hindurchgeführt ist.

Im Falle des vorliegenden Ausführungsbeispiels ist der Motor M als ein getriebeloser Torquemotor ausgebildet.

Der Motor M und die Indexwelle 13 sind derart an der Spritzgießmaschine 1 angeordnet, dass die Zentrumsachse der hohlen Motorwelle 17 und die Zentrumsachse der Indexwelle 13 auf einer gemeinsamen Drehachse liegen. Die hohle Motorwelle 17 erstreckt sich im Falle der vorliegenden Ausführungsbeispiele koaxial zur Indexwelle 13 und die Indexwelle 13 ist aus einem von der Indexplatte 14 abgewandten Ende der hohle Motorwelle 17 herausgeführt.

Die durch den Kanal 15 der Indexwelle 13 hindurchgeführte Fluidleitung 16 ist im Falle der Ausführungsvariante gemäß Fig. 4 und Fig. 5 an einem der Indexplatte 14 abgewandten Stirnende 13.3 der Indexwelle 13 axial aus dem Kanal 15 der Indexwelle 13 herausgeführt und außerhalb der Indexwelle 13 zumindest im Wesentlichen um eine 90 Grad-Biegung von der Drehachse der Indexwelle 13 weggeführt und anschließend in eine um die Drehachse der Indexwelle 13 abrollende Energiekette 18 der Spritzgießmaschine 1 hineingeführt.

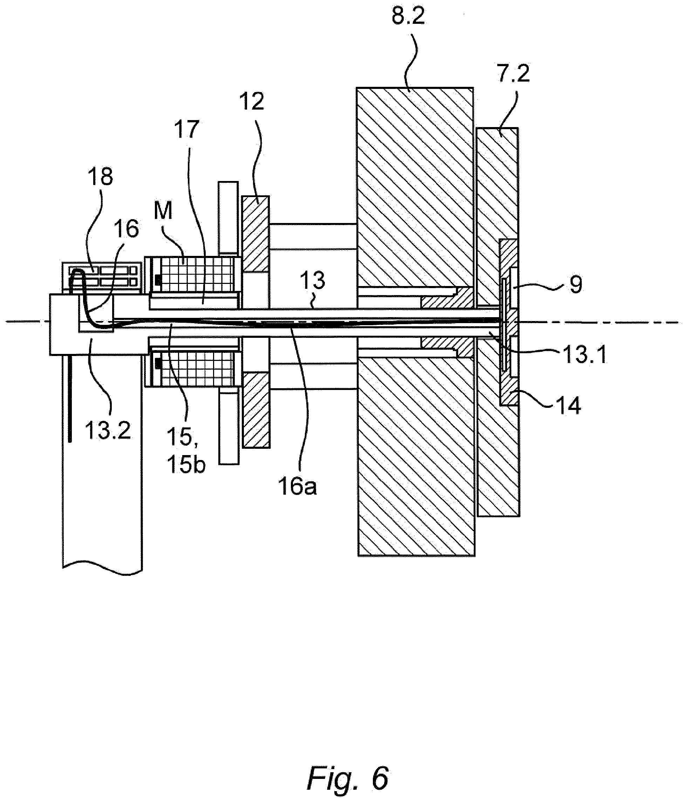

Die durch den Kanal 15 der Indexwelle 13 hindurchgeführte Fluidleitung 16 ist im Falle der Ausführungsvariante gemäß Fig. 6 an einem der Indexplatte 14 abgewandten Endabschnitt 13.2 der Indexwelle 13 radial aus dem Kanal 15 der Indexwelle 13 herausgeführt und seitlich der Indexwelle 13 in eine um die Drehachse der Indexwelle 13 abrollende Energiekette 18 der Spritzgießmaschine 1 hineingeführt.

Generell weist die Spritzgießmaschine 1 auch gemäß den dargestellten Ausführungsbeispielen eine verstellbar gelagerte Auswerferplatte 12 auf, die im Falle der gezeigten Ausführungsbeispiele an einer dem Spritzgießwerkzeug 7 abgewandten Rückseite der ersten Formaufspannplatte 8.1 angeordnet ist und die ihrerseits eine dem Spritzgießwerkzeug 7 abgewandte Rückseite aufweist, an der sowohl der Motor M mit seinem Motorgehäuse befestigt ist, als auch die Indexwelle 13 durch den Motor M drehbar und relativ zur Auswerferplatte 12 in axialer Richtung unbeweglich gelagert ist.

Die hohle Motorwelle 17 kann ein Innenprofil aufweisen und die Indexwelle 13 kann dabei ein Außenprofil aufweisen, wobei das Innenprofil der hohlen Motorwelle 17 und das Außenprofil der Indexwelle 13 derart aufeinander abgestimmt sind, dass die hohle Motorwelle 17 drehfest mit der Indexwelle 13 gekoppelt ist. Die hohle Motorwelle 17 kann jedoch alternativ mittels anderer Welle-Nabe-Verbindungen mit der Indexwelle 13 gekoppelt sein, so beispielsweise mit an sich bekannten Spannelementen, Mitnehmerelementen, wie Passfedern und Passnuten, sowie Flanschkupplungen, Klemmkupplungen oder Spannhülsen.

Die Fluidleitung 16 ist im Falle der vorliegenden Ausführungsbeispiele als eine sich einstückig durch die hohle Motorwelle 17 des Motors M und den Kanal 15 der Indexwelle 13 bis zur Indexplatte 14 erstreckende Schlauchleitung ausgebildet.

### Bezugszeichenliste

- 1: Kunststoff-Spritzgießmaschine
- 2: Maschinengestell
- 3: Spritzeinheit
- 4: Schließeinheit
- 5: Extruder
- 6: Aufgabetrichter
- 7: Spritzgießwerkzeug
- 7.1: erste Formhälfte
- 7.2: zweite Formhälfte
- 8.1: erste Formaufspannplatte
- 8.2: zweite Formaufspannplatte
- 9: Kavität
- 10: Maschinensteuerung
- 11: Benutzerschnittstellenvorrichtung
- 12: Auswerferplatte
- 13: Indexwelle
- 13.1,13.2: Endabschnitt
- 13.3: Stirnende
- 14: Indexplatte
- 15: Kanal
- 15a: Strömungskanal
- 15b: Tunnel
- 16: Fluidleitung
- 16a: Abschnitt einer Fluidleitung
- 16.1: Zulauffluidleitung
- 17: hohle Motorwelle
- 18: Energiekette
- 19: Anschlussstück
- M: Motor

## Patentansprüche

1. Spritzgießmaschine, aufweisend eine erste Formaufspannplatte (8.1), die ausgebildet ist zum Tragen einer ersten Formhälfte (7.1) eines Spritzgießwerkzeugs (7), eine zweite Formaufspannplatte (8.2), die ausgebildet ist zum Tragen einer zweiten Formhälfte (7.2) des Spritzgießwerkzeugs (7), derart, dass die erste Formhälfte (7.1) und die zweite Formhälfte (7.2) in einem geschlossenen Zustand des Spritzgießwerkzeugs (7) wenigstens eine Kavität (9) des Spritzgießwerkzeugs (7) begrenzen, und aufweisend eine an der Spritzgießmaschine (1) außerhalb des Spritzgießwerkzeugs (7) drehbar und axial verstellbar gelagerte Indexwelle (13), die mittels eines außerhalb des Spritzgießwerkzeugs (7) angeordneten Motors (M) der Spritzgießmaschine (1) drehangetrieben ist und die einen in der Einbaulage des Spritzgießwerkzeugs (7) in der Spritzgießmaschine (1) in das Spritzgießwerkzeug (7) hineinragenden Endabschnitt (13.1) aufweist, der zum Befestigen einer innerhalb des Spritzgießwerkzeugs (7) anzuordnenden Indexplatte (14) an der Indexwelle (13) ausgebildet ist und die wenigstens einen Kanal (15) aufweist, wobei die Indexplatte (14) mittels der von dem Motor (M) angetriebenen Indexwelle (13) zwischen einer ersten Plattenstellung der Indexplatte (14) und wenigstens einer zweiten Plattenstellung der Indexplatte (14) automatisch verstellbar ist, und wobei der Motor (M) eine hohle Motorwelle (17) aufweist, **dadurch gekennzeichnet, dass** der Kanal (15) der Indexwelle (13) ausgebildet ist, ein Fluid der Indexplatte (14) zuzuführen oder von der Indexplatte (14) abzuführen und wobei das Fluid durch die hohle Motorwelle (17) des Motors (M) hindurchgeführt ist.

2. Spritzgießmaschine nach Anspruch 1,
**dadurch gekennzeichnet, dass** der Motor (M) als ein getriebeloser Torquemotor ausgebildet ist.

3. Spritzgießmaschine nach Anspruch 1 oder 2,
**dadurch gekennzeichnet, dass** der Motor (M) und die Indexwelle (13) derart an der Spritzgießmaschine (1) angeordnet sind, dass die Zentrumsachse der hohlen Motorwelle (17) und die Zentrumsachse der Indexwelle (13) auf einer gemeinsamen Drehachse liegen.

4. Spritzgießmaschine nach Anspruch 3,
**dadurch gekennzeichnet, dass** die hohle Motorwelle (17) sich koaxial zur Indexwelle (13) erstreckt und die Indexwelle (13) aus einem von der Indexplatte (14) abgewandten Ende der hohlen Motorwelle (17) herausgeführt ist.

5. Spritzgießmaschine nach einem der Ansprüche 1 bis 4,
**dadurch gekennzeichnet, dass** der Kanal (15) als ein Strömungskanal (15a) ausgebildet ist, in dem das Fluid zwischen einem der Indexplatte (14) abgewandten Endabschnitt (13.2) der Indexwelle (13) und dem in das Spritzgießwerkzeug (7) hineinragenden Endabschnitt (13.1) der Indexwelle (13) gefördert wird.

6. Spritzgießmaschine nach Anspruch 5,
**dadurch gekennzeichnet, dass** die Indexwelle (13) an ihrem der Indexplatte (14) abgewandten Endabschnitt (13.2) ein Anschlussstück (19) aufweist, das strömungstechnisch mit dem Strömungskanal (15a) verbunden ist und an das eine Zulauffluidleitung (16.1) angeschlossen ist.

7. Spritzgießmaschine nach einem der Ansprüche 1 bis 4,
**dadurch gekennzeichnet, dass** der Kanal (15) als ein Tunnel (15a) ausgebildet ist, in dem eine Fluidleitung (16) oder ein Abschnitt einer Fluidleitung (16a) verlegt ist, wobei das Fluid innerhalb der Fluidleitung (16) oder dem Abschnitt der Fluidleitung (16a) zwischen einem der Indexplatte (14) abgewandten Endabschnitt (13.2) der Indexwelle (13) und dem in das Spritzgießwerkzeug (7) hineinragenden Endabschnitt (13.1) der Indexwelle (13) gefördert wird.

8. Spritzgießmaschine nach Anspruch 6 oder 7,
**dadurch gekennzeichnet, dass** die Zulauffluidleitung (16.1) an einem der Indexplatte (14) abgewandten Endabschnitt (13.2) der Indexwelle (13) radial wegführend an die Indexwelle (13) angeschlossen ist und seitlich der Indexwelle (13) in eine um die Drehachse der Indexwelle abrollende Energiekette (18) der Spritzgießmaschine (1) hineingeführt ist, oder die durch den Kanal (15) der Indexwelle (13) hindurchgeführte Fluidleitung (16) oder der Abschnitt der Fluidleitung (16a) an einem der Indexplatte (14) abgewandten Endabschnitt (13.2) der Indexwelle (13) radial aus dem Kanal (15) der Indexwelle (13) herausgeführt ist und seitlich der Indexwelle (13) in eine um die Drehachse der Indexwelle abrollende Energiekette (18) der Spritzgießmaschine (1) hineingeführt ist.

9. Spritzgießmaschine nach einem der Ansprüche 1 bis 8,
**dadurch gekennzeichnet, dass** die Zulauffluidleitung (16.1) an einem der Indexplatte (13) abgewandten Stirnende (13.3) der Indexwelle (13) axial an die Indexwelle (13) angeschlossen ist und außerhalb der Indexwelle (13) zumindest im Wesentlichen um eine 90 Grad-Biegung von der Drehachse der Indexwelle (13) weggeführt ist und anschließend in eine um die Drehachse der Indexwelle (13) abrollende Energiekette (18) der Spritzgießmaschine (1) hineingeführt ist oder die durch den Kanal (15) der Indexwelle (13) hindurchgeführte Fluidleitung (16) oder der Abschnitt der Fluidleitung (16a) an einem der Indexplatte (14) abgewandten Stirnende (13.3) der Indexwelle (13) axial aus dem Kanal (15) der Indexwelle (13) herausgeführt ist und außerhalb der Indexwelle (13) zumindest im Wesentlichen um eine 90 Grad-Biegung von der Drehachse der Indexwelle (13) weggeführt ist und anschließend in eine um die Drehachse der Indexwelle (13) abrollende Energiekette (18) der Spritzgießmaschine (1) hineingeführt ist.

10. Spritzgießmaschine nach einem der Ansprüche 1 bis 9,
**dadurch gekennzeichnet, dass** die Spritzgießmaschine (1) eine verstellbar gelagerte Auswerferplatte (12) aufweist, die an einer dem Spritzgießwerkzeug (7) abgewandten Rückseite der ersten Formaufspannplatte (8.1) oder der zweiten Formaufspannplatte (8.2) angeordnet ist und die ihrerseits eine dem Spritzgießwerkzeug (7) abgewandte Rückseite aufweist, an der sowohl der Motor (M) mit seinem Motorgehäuse befestigt ist, als auch die Indexwelle (13) durch den Motor (M) drehbar und relativ zur Auswerferplatte (12) in axialer Richtung unbeweglich gelagert ist.

11. Spritzgießmaschine nach einem der Ansprüche 1 bis 10,
**dadurch gekennzeichnet, dass** die hohle Motorwelle (17) ein Innenprofil aufweist und die Indexwelle (13) ein Außenprofil aufweist, wobei das Innenprofil der hohlen Motorwelle (17) und das Außenprofil der Indexwelle (13) derart aufeinander abgestimmt sind, dass die hohle Motorwelle (17) drehfest mit der Indexwelle (13) gekoppelt ist.

12. Spritzgießmaschine nach Anspruch 11,
**dadurch gekennzeichnet, dass** die Indexwelle (13) in axialer Richtung relativ zur hohlen Motorwelle (17) verschiebbar geführt ist.

## Claims

1. An injection-moulding machine, having a first platen (8.1), which is designed for carrying a first mould half (7.1) of an injection mould (7), a second platen (8.2), which is designed for carrying a second mould half (7.2) of the injection mould (7) in such a way that in a closed state of the injection mould (7) the first mould half (7.1) and the second mould half (7.2) delimit at least one cavity (9) of the injection mould (7), and having an index shaft (13), which is mounted rotatably and axially adjustably on the injection-moulding machine (1) outside the injection mould (7), is rotationally driven by means of a motor (M) of the injection-moulding machine (1) arranged outside the injection mould (7) and has an end portion (13.1) which protrudes into the injection mould (7) in the installed position of the injection mould (7) in the injection-moulding machine (1), is designed for fastening on the index shaft (13) an index plate (14) to be arranged within the injection mould (7) and has at least one channel (15) which is designed to feed a fluid to the index plate (14) or to remove a fluid from the index plate (14), wherein by means of the index shaft (13), driven by the motor (M), the index plate (14) is automatically adjustable between a first plate position of the index plate (14) and at least one second plate position of the index plate (14), and wherein the motor (M) has a hollow motor shaft (17), through which the fluid is passed.

2. The injection-moulding machine according to Claim 1,
**characterized in that** the motor (M) is configured as a gearless torque motor.

3. The injection-moulding machine according to Claim 1 or 2,
**characterized in that** the motor (M) and the index shaft (13) are arranged on the injection-moulding machine (1) in such a way that the central axis of the hollow motor shaft (17) and the central axis of the index shaft (13) lie on a common rotation axis.

4. The injection-moulding machine according to Claim 3,
**characterized in that** the hollow motor shaft (17) extends coaxially to the index shaft (13), and the index shaft (13) is directed out from an end of the hollow motor shaft (17) facing away from the index plate (14).

5. The injection-moulding machine according to one of Claims 1 to 4,
**characterized in that** the channel (15) is configured as a flow channel (15a), in which the fluid is conveyed between an end portion (13.2) of the index shaft (13) facing away from the index plate (14) and the end portion (13.1) of the index shaft (13) protruding into the injection mould (7).

6. The injection-moulding machine according to Claim 5,
**characterized in that** the index shaft (13) has, at its end portion (13.2) facing away from the index plate (14), a connection piece (19), which is fluidically connected with the flow channel (15a) and to which a fluid feed line (16.1) is connected.

7. The injection-moulding machine according to one of Claims 1 to 4,
**characterized in that** the channel (15) is configured as a tunnel (15a) in which a fluid line (16) or a portion of a fluid line (16a) is laid, wherein the fluid within the fluid line (16) or the portion of the fluid line (16a) is conveyed between an end portion (13.2) of the index shaft (13), facing away from the index plate (14), and the end portion (13.1) of the index shaft (13) protruding into the injection mould (7).

8. The injection-moulding machine according to Claim 6 or 7,
**characterized in that** at an end portion (13.2) of the index shaft (13), facing away from the index plate (14), the fluid feed line (16.1) is connected to the index shaft (13) in a manner leading radially away, and laterally to the index shaft (13) is directed into an energy chain (18) of the injection-moulding machine (1) rolling around the rotation axis of the index shaft, or the fluid line (16), passed through the channel (15) of the index shaft (13), or the portion of the fluid line (16a) at an end portion (13.2) of the index shaft (13), facing away from the index plate (14), is directed radially out from the channel (15) of the index shaft (13) and laterally to the index shaft (13) is directed into an energy chain (18) of the injection-moulding machine (1) rolling around the rotation axis of the index shaft.

9. The injection-moulding machine according to one of Claims 1 to 8,
**characterized in that** the fluid feed line (16.1) is connected axially to the index shaft (13) at a front end (13.3) of the index shaft (13) facing away from the index plate (14), and outside the index shaft (13) is directed away from the rotation axis of the index shaft (13) at least substantially about a 90 degree bend, and subsequently is introduced into an energy chain (18) of the injection-moulding machine (1) rolling around the rotation axis of the index shaft (13), or the fluid line (16), passed through the channel (15) of the index shaft (13), or the portion of the fluid line (16a) at a front end (13.3) of the index shaft (13) facing away from the index plate (14) is directed out from the channel (15) of the index shaft (13) and outside the index shaft (13) is directed away from the rotation axis of the index shaft (13) at least substantially about a 90 degree bend, and subsequently is introduced into an energy chain (18) of the injection-moulding machine (1) rolling around the rotation axis of the index shaft (13).

10. The injection-moulding machine according to one of Claims 1 to 9,
**characterized in that** the injection-moulding machine (1) has an adjustably mounted ejector plate (12) which is arranged on a rear side of the first platen (8.1) or of the second platen (8.2) facing away from the injection mould (7), and which in turn has a rear side facing away from the injection mould (7), on which rear side both the motor (M) with its motor housing is fastened, and also the index shaft (13) is mounted rotatably by the motor (M) and immovably relative to the ejector plate (12) in axial direction.

11. The injection-moulding machine according to one of Claims 1 to 10,
**characterized in that** the hollow motor shaft (17) has an inner profile and the index shaft (13) has an outer profile, wherein the inner profile of the hollow motor shaft (17) and the outer profile of the index shaft (13) are coordinated with one another in such a way that the hollow motor shaft (17) is coupled with the index shaft (13) in a torque-proof manner.

12. The injection-moulding machine according to Claim 11,
**characterized in that** the index shaft (13) is directed displaceably in axial direction relative to the hollow motor shaft (17).

## Revendications

1. Machine de moulage par injection, présentant une première plaque de serrage de moule (8.1) qui est conçue pour supporter une première moitié de moule (7.1) d'un outil de moulage par injection (7), une deuxième plaque de serrage de moule (8.2) qui est conçue pour supporter une seconde moitié de moule (7.2) de l'outil de moulage par injection (7) de telle façon que la première moitié de moule (7.1) et la seconde moitié de moule (7.2) délimitent au moins une cavité (9) de l'outil de moulage par injection (7) lorsque l'outil de moulage par injection (7) est dans un état fermé, et présentant un arbre d'indexage (13) disposé rotatif et mobile axialement sur la machine de moulage par injection (1) hors de l'outil de moulage par injection (7), qui est entraîné en rotation par un moteur (M) de la machine de moulage par injection (1) disposé à l'extérieur de l'outil de moulage par injection (7) et qui présente un tronçon d'extrémité (13.1) faisant saillie dans l'outil de moulage par injection (7) dans la position de montage de l'outil de moulage par injection (7) dans la machine de moulage par injection (1), qui est formé sur l'arbre d'indexage (13) pour fixer une plaque d'indexage (14) à disposer à l'intérieur de l'outil de moulage par injection (7), et qui présente au moins un canal (15), dans laquelle la plaque d'indexage (14) est mobile automatiquement entre une première position de plaque de la plaque d'indexage (14) et au moins une seconde position de plaque de la plaque d'indexage (14) au moyen de l'arbre d'indexage (13) entraîné par le moteur (M), et dans laquelle le moteur (M) présente un arbre de moteur creux (17), **caractérisée en ce que** le canal (15) de l'arbre d'indexage (13) est conçu pour guider un fluide vers la plaque d'indexage (14) ou l'évacuer de la plaque d'indexage (14) et dans laquelle le fluide est dirigé à travers l'arbre de moteur creux (17) du moteur (M).

2. Machine de moulage par injection selon la revendication 1, **caractérisée en ce que** le moteur (M) est conçu en tant qu'un moteur à couple à entraînement direct.

3. Machine de moulage par injection selon la revendication 1 ou 2, **caractérisée en ce que** le moteur (M) et l'arbre d'indexage (13) sont disposés de telle façon sur la machine de moulage par injection (1) que l'axe central de l'arbre de moteur creux (17) et l'axe central de l'arbre d'indexage (13) reposent sur un pivot commun.

4. Machine de moulage par injection selon la revendication 3, **caractérisée en ce que**
l'arbre de moteur creux (17) s'étend coaxialement à l'arbre d'indexage (13) et l'arbre d'indexage (13) sort d'une extrémité de l'arbre de moteur creux (17) détournée de la plaque d'indexage (14).

5. Machine de moulage par injection selon l'une des revendications 1 à 4,
**caractérisée en ce que** le canal (15) est conçu en tant qu'un canal d'écoulement (15a) dans lequel le fluide est transporté entre un tronçon d'extrémité (13.2) de l'arbre d'indexage (13) détourné de la plaque d'indexage (14) et le tronçon d'extrémité (13.1) de l'arbre d'indexage (13) faisant saillie dans l'outil de moulage par injection (7).

6. Machine de moulage par injection selon la revendication 5, **caractérisée en ce que** l'arbre d'indexage (13) présente une pièce de connexion (19) sur son tronçon d'extrémité (13.2) détourné de la plaque d'indexage (14), qui est reliée en technique d'écoulement avec le canal d'écoulement (15a) et est raccordée à l'une ligne de fluide entrant (16.1).

7. Machine de moulage par injection selon l'une des revendications 1 à 4,
**caractérisée en ce que** le canal (15) est conçu en tant qu'un tunnel (15a) dans lequel une ligne de fluide (16) ou un tronçon d'une ligne de fluide (16a) est posé(e), dans lequel le fluide à l'intérieur d'une ligne de fluide (16) ou du tronçon de la ligne de fluide (16a) est transporté entre un tronçon d'extrémité (13.2) de l'arbre d'indexage (13) détourné de la plaque d'indexage (14) et le tronçon d'indexage (13.1) de l'arbre d'indexage (13) faisant saillie dans l'outil de moulage par injection (7).

8. Machine de moulage par injection selon la revendication 6 ou 7, **caractérisée en ce que** la ligne de fluide entrant (16.1) sur un tronçon d'extrémité (13.2) de l'arbre d'indexage (13) détourné de la plaque d'indexage (14) est raccordée à l'arbre d'indexage (13) en s'éloignant radialement et est introduite dans une chaîne d'énergie (18) de la machine de moulage par injection (1) se déroulant sur le pivot de l'arbre d'indexage, sur le côté de l'arbre d'indexage (13), ou bien la ligne de fluide (16) dirigée à travers le canal (15) de l'arbre d'indexage (13) ou bien le tronçon de la ligne de fluide (16a) sur un tronçon d'extrémité (13.2) de l'arbre d'indexage (13) détourné de la plaque d'indexage (14) sort radialement du canal (15) de l'arbre d'indexage (13), et est introduit(e) dans une chaîne d'énergie (18) de la machine de moulage par injection (1) se déroulant sur le pivot de l'arbre d'indexage, sur le côté de l'arbre d'indexage (13).

9. Machine de moulage par injection selon l'une des revendications 1 à 8 ,
**caractérisée en ce que** la ligne de fluide entrant (16.1) sur une extrémité avant (13.3) de l'arbre d'indexage (13) détournée de la plaque d'indexage (13) est raccordée axialement à l'arbre d'indexage (13) et, à l'extérieur de l'arbre d'indexage (13), est éloignée au moins essentiellement d'une flexion de 90 degrés du pivot de l'arbre d'indexage (13) et enfin est introduite dans une chaîne d'énergie (18) de la machine de moulage par injection (1) se déroulant sur le pivot de l'arbre d'indexage, ou bien la ligne de fluide (16) passée à travers le canal (15) de l'arbre d'indexage (13) ou bien le tronçon de la ligne de fluide (16a) sur un tronçon d'extrémité (13.3) de l'arbre d'indexage (13) est sorti(e) radialement du canal (15) de l'arbre d'indexage (13) et est éloigné(e) d'une flexion de 90 degrés du pivot de l'arbre d'indexage (13) et enfin est introduit(e) dans une chaîne d'énergie (18) de la machine de moulage par injection (1) se déroulant sur le pivot de l'arbre d'indexage (13).

10. Machine de moulage par injection selon l'une des revendications 1 à 9,
**caractérisée en ce que** la machine de moulage par injection (1) présente une plaque d'éjecteur (12) positionnée mobile qui est disposée sur une face arrière de la première plaque de serrage de moule (8.1) ou de la deuxième plaque de serrage de moule (8.2) détournée de l'outil de moulage par injection (7) et qui présente à son tour une face arrière détournée de l'outil de moulage par injection (7) sur laquelle tant le moteur (M) est fixé par son carter de moteur qu'également l'arbre d'indexage (13) est disposé rotatif par le moteur (M) et immobile dans le sens axial par rapport à la plaque d'éjecteur (12).

11. Machine de moulage par injection selon l'une des revendications 1 à 10,
**caractérisée en ce que** l'arbre de moteur creux (17) présente un profilé intérieur et l'arbre d'indexage (13) présente un profilé extérieur, dans lequel le profilé intérieur de l'arbre de moteur creux (17) et le profilé extérieur de l'arbre d'indexage (13) sont ainsi coordonnés entre eux que l'arbre de moteur creux (17) est couplé fixe en rotation à l'arbre d'indexage (13).

12. Machine de moulage par injection selon la revendication 11, **caractérisée en ce que** l'arbre d'indexage (13) est dirigé mobile dans le sens axial par rapport à l'arbre de moteur creux (17).
